# EUROPEAN PATENT APPLICATION

(11) **EP 4 538 118 A1**
(43) Date of publication of application: **16.04.2025**
(21) Application number: 22948531.3
(22) Date of filing: 30.06.2022
(51) Int. Cl.: B60R 16/02, B60J 1/00

(54) **POWER SUPPLY APPARATUS, DOOR ASSEMBLY, VEHICLE AND ELECTRONIC DEVICE**

(71) Applicant: Shenzhen Yinwang Intelligent Technologies Co., Ltd., Shenzhen, Guangdong 518129 (CN)
(72) Inventor: SHI, Hao, Shenzhen, Guangdong 518129 (CN); SUN, Jian, Shenzhen, Guangdong 518129 (CN); KANG, Shaohai, Shenzhen, Guangdong 518129 (CN); WANG, Hongji, Shenzhen, Guangdong 518129 (CN); ZHANG, Jing, Shenzhen, Guangdong 518129 (CN); CHEN, Xuanxuan, Shenzhen, Guangdong 518129 (CN)
(74) Representative: Pfenning, Meinig & Partner mbB
(86) International application number: PCT/CN2022/102884
(87) International publication number: WO 2024/000426

(57) **Abstract**

Embodiments of this application provide a power supply apparatus, a vehicle door assembly, a vehicle, and an electronic device, which may be used in the fields such as intelligent vehicle, smart home, and construction. The power supply apparatus includes: a slide rail; a slider, where the slider is disposed on the slide rail, and the slider is configured to fasten a to-be-moved apparatus; a drag chain harness groove, where the drag chain harness groove is fastened to the slide rail; and a drag chain harness, where the drag chain harness is disposed in the drag chain harness groove, the drag chain harness includes a fastened end and a movable end, the fastened end is configured to electrically connect to a power supply, the fastened end is fastened relative to the drag chain harness groove, and the movable end is configured to electrically connect to the to-be-moved apparatus. The solutions of this application can be used to supply power to a to-be-moved apparatus.

## Description

### TECHNICAL FIELD

Embodiments of this application relate to the field of mechanical electronics, and more specifically, to a power supply apparatus, a vehicle door assembly, a vehicle, and an electronic device.

### BACKGROUND

To improve user experience, glass, displays, curtains, skylights, and the like used in the fields such as transportation means, smart home, and construction are mostly designed to be movable. In addition, with the development of science and technology, a user has a higher requirement for functions of these to-be-moved apparatuses.

For example, for vehicle door glass of a vehicle in the transportation means field, users require different functions such as privacy, sunshade, light adjustment, color adjustment, display, and touch. However, conventional vehicle door glass is not powered, and cannot implement the foregoing functions. Power needs to be supplied to the vehicle door glass to implement the foregoing functions of the vehicle door glass.

Therefore, how to supply power to the to-be-moved apparatuses such as the vehicle door glass is a technical problem that needs to be urgently resolved.

### SUMMARY

Embodiments of this application provide a power supply apparatus, a vehicle door assembly, a vehicle, and an electronic device, so that power can be supplied to to-be-moved apparatuses such as vehicle door glass.

According to a first aspect, a power supply apparatus is provided, including: a slide rail; a slider, where the slider is disposed on the slide rail, and the slider is configured to fasten a to-be-moved apparatus; a drag chain harness groove, where the drag chain harness groove is fastened to the slide rail; and a drag chain harness, where the drag chain harness is disposed in the drag chain harness groove, the drag chain harness includes a fastened end and a movable end, the fastened end is configured to electrically connect to a power supply, the fastened end is fastened relative to the drag chain harness groove, and the movable end is configured to electrically connect to the to-be-moved apparatus.

The slider is disposed on the slide rail, and the slider may move along a track direction of the slide rail.

The slider may be used to fasten the to-be-moved apparatus by using a fastening apparatus. Optionally, the fastening apparatus may be a clamp. Specifically, the clamp may be disposed on the slider, and then the to-be-moved apparatus is clamped and fastened by using the clamp.

The drag chain harness includes a drag chain and a harness wrapped by the drag chain. The drag chain includes a plurality of chain sections, and the plurality of chain sections may be connected by using connecting pins.

Optionally, the fastened end may be electrically connected to the power supply directly, or may be electrically connected to the power supply by using a harness. This is not limited.

Optionally, the movable end may be electrically connected to the to-be-moved apparatus directly, or may be electrically connected to the to-be-moved apparatus indirectly by using an extended harness. The movable end may move together with the to-be-moved apparatus.

Optionally, the to-be-moved apparatus may include to-be-moved glass, a display, a curtain, a television, a skylight, a lidar, a sound system, a camera, and the like that are used in the fields such as transportation means, smart home, construction, and smartphone. This is not limited in this application. The movement includes lifting movement, left-right movement, forward-backward movement, and the like. A movement direction of the to-be-moved apparatus is not limited in this application.

In a conventional solution, movement of a to-be-moved apparatus may be implemented by using a slide rail and a slider. Specifically, the slider is disposed on the slide rail, so that the slider can move on a track of the slide rail. In addition, the to-be-moved apparatus is fastened to the slider, so that the to-be-moved apparatus can move together with the slider.

According to the power supply apparatus provided in this embodiment of this application, the drag chain harness groove and the drag chain harness are mainly added on a basis of a conventional slide rail and a conventional slider. The drag chain harness groove is fastened to the slide rail, the drag chain harness is disposed in the drag chain harness groove, and the drag chain harness includes the fastened end electrically connected to the power supply and the movable end electrically connected to the to-be-moved apparatus, so that power can be supplied to the to-be-moved apparatus.

In addition, in this embodiment of this application, the drag chain harness is used, to protect and restrict an internal harness by using the drag chain, so as to avoid a problem of poor durability of the harness caused by direct use of the harness. In addition, the drag chain harness is disposed in the drag chain harness groove, so that a problem that the harness is wound and knotted can be avoided; and the drag chain harness groove may provide guidance and limiting for the drag chain harness, so as to prevent problems such as shaking and abnormal noise generated in a movement process of the drag chain harness.

With reference to the first aspect, in some implementations of the first aspect, the slide rail includes a slider groove, the slider is disposed in the slider groove of the slide rail, and the drag chain harness groove and the slider groove are distributed along a first direction; or the drag chain harness groove and the slider groove are distributed along a second direction, where the first direction and the second direction form a first included angle.

The slider groove may be disposed on the slide rail along a track direction of the slide rail.

In this embodiment of this application, the drag chain harness groove and the slider groove may be distributed along a first direction, or may be distributed along a second direction, where the first direction and the second direction may form a first included angle. This means that positions of the drag chain harness groove and the slider groove in the solution of this application may be flexibly set.

Optionally, the first direction may be perpendicular to the track direction of the slide rail and parallel to a plane on which the to-be-moved apparatus is located; and the second direction may be perpendicular to the track direction of the slide rail and perpendicular to the plane on which the to-be-moved apparatus is located, and the first included angle is 90°.

With reference to the first aspect, in some implementations of the first aspect, the first direction is perpendicular to a track direction of the slide rail, and the first direction is parallel to a plane on which the to-be-moved apparatus is located; and if the drag chain harness groove and the slider groove are distributed along the first direction, openings of the drag chain harness groove and the slider groove face the plane on which the to-be-moved apparatus is located.

In this embodiment of this application, the first direction is perpendicular to the track direction of the slide rail, and the first direction is parallel to the plane on which the to-be-moved apparatus is located; and if the drag chain harness groove and the slider groove are distributed along the first direction, openings of the drag chain harness groove and the slider groove face the plane on which the to-be-moved apparatus is located, so that consistency of movement trajectories of the drag chain harness and the slider can be ensured.

With reference to the first aspect, in some implementations of the first aspect, the second direction is perpendicular to a track direction of the slide rail, and the second direction is perpendicular to a plane on which the to-be-moved apparatus is located; and if the drag chain harness groove and the slider groove are distributed along the second direction, an opening of the drag chain harness groove faces the plane on which the to-be-moved apparatus is located, the drag chain harness groove is disposed on a side that is of the slider groove and that is away from the slider groove, and the opening of the drag chain harness groove faces the slider groove.

In this embodiment of this application, the second direction is perpendicular to the track direction of the slide rail, and the second direction is perpendicular to the plane on which the to-be-moved apparatus is located; and if the drag chain harness groove and the slider groove are distributed along the second direction, the opening of the drag chain harness groove faces the plane on which the to-be-moved apparatus is located, the drag chain harness groove is disposed on a side that is of the slider groove and that is away from the slider groove, and the opening of the drag chain harness groove faces the slider groove. In this way, integration of the power supply apparatus is higher, so that space is saved. In addition, it can be ensured that a track direction of the drag chain harness groove is consistent with the track direction of the slider groove, so that consistency of movement trajectories of the drag chain harness and the slider can be ensured.

With reference to the first aspect, in some implementations of the first aspect, the drag chain harness groove is disposed on the slide rail.

Specifically, the drag chain harness groove may be disposed on the slide rail along the track direction of the slide rail.

That the drag chain harness groove is disposed on the slide rail may be understood that the drag chain harness groove and the slide rail are integrally formed.

The drag chain harness groove in the power supply apparatus provided in this embodiment of this application may be disposed on the slide rail. In this way, integration of the power supply apparatus is higher, so that space is saved. In addition, it can be ensured that a track direction of the drag chain harness groove is consistent with the track direction of the slide rail, so that consistency of movement trajectories of the drag chain harness and the slider can be ensured.

With reference to the first aspect, in some implementations of the first aspect, the drag chain harness groove is fastened to the slide rail by using a support.

In this embodiment of this application, the drag chain harness groove may be fastened on the slide rail by using the support, which means that the drag chain harness groove may be directly fastened on the basis of the conventional slide rail by using the support, and the conventional slide rail does not need to be improved, thereby reducing complexity of a manufacturing process.

Optionally, that the drag chain harness groove is fastened to the slide rail may also mean that the drag chain harness groove is fastened together with the slide rail through bonding or welding.

With reference to the first aspect, in some implementations of the first aspect, the power supply apparatus further includes: a limiter, where the limiter is disposed on the slider or the to-be-moved apparatus, and is configured to limit a projection of the movable end on a cross section of the power supply apparatus to moving away from a projection of the fastened end.

The power supply apparatus provided in this embodiment of this application may further include a limiter, to limit a projection of the movable end on a cross section of the power supply apparatus to moving away from a projection of the fastened end, so as to prevent a case such as shaking or abnormal noise generated by the movable end of the drag chain harness in a movement process.

Optionally, the limiter may be disposed on the slider, the to-be-moved apparatus, a clamp, or the like, and can move along with the movable end.

Optionally, the limiter may include any one of a baffle plate, a stopper, a top reinforcement bar, and the like. This is not limited.

With reference to the first aspect, in some implementations of the first aspect, the fastened end and the movable end are distributed along a third direction; or the fastened end and the movable end are distributed along a fourth direction, where the third direction and the fourth direction form a second included angle.

In this embodiment of this application, the fastened end and the movable end may be distributed along the third direction; or the fastened end and the movable end may be distributed along the fourth direction, where the third direction and the fourth direction may form the second included angle. This means that positions of the fastened end and the movable end in the solution of this application may be flexibly set.

Optionally, the third direction may be perpendicular to the track direction of the slide rail and parallel to a plane on which the to-be-moved apparatus is located; and the fourth direction may be perpendicular to the track direction of the slide rail and perpendicular to the plane on which the to-be-moved apparatus is located, and the second included angle is 90°.

With reference to the first aspect, in some implementations of the first aspect, the fastened end is fastened at a first position on the drag chain harness groove, and the first position is located between two ends of the drag chain harness groove.

In this embodiment of this application, the fastened end may be fastened between the two ends of the drag chain harness groove. Compared with a case in which the fastened end is fastened between the two ends of the drag chain harness groove, a length of the drag chain harness can be reduced, and a weight and costs of the drag chain harness can be reduced.

With reference to the first aspect, in some implementations of the first aspect, the power supply apparatus further includes: a pull cable, where the pull cable is connected to the slider and is configured to pull the slider to move on the slide rail; pulleys, where the pulleys are disposed at two ends of the slide rail and are configured to provide movement guidance and a turning radius for the pull cable; and a motor and winch, where the motor and winch is configured to provide power to pull, through rotation of the winch, the pull cable to move.

With reference to the first aspect, in some implementations of the first aspect, the motor is disposed between two ends of the slide rail, and the fastened end is fastened to the motor.

"Between two ends of the slide rail" means between two ends of a track of the slide rail.

In this embodiment of this application, the motor may be disposed between the two ends of the slide rail. In this case, the fastened end may be fastened on the motor. Compared with the case in which the fastened end is fastened to the two ends of the drag chain harness groove, a length of the drag chain harness can be reduced, and a weight and costs of the drag chain harness can be reduced.

With reference to the first aspect, in some implementations of the first aspect, the movable end is fastened to the slider, and the movable end is electrically connected to the to-be-moved apparatus by using an extended harness; or the movable end is fastened to the to-be-moved apparatus.

In an implementation, the movable end may be fastened on a component that can be moved together with the to-be-moved apparatus, such as a slider or a clamp, and then electrically connected to the to-be-moved apparatus by using the extended harness. In this implementation, because the component such as a slider or a clamp that can be moved together with the to-be-moved apparatus is stationary relative to the to-be-moved apparatus, the extended harness is not dragged or pulled in a moving process, so that durability of the extended harness can be ensured. In addition, the harness in the movable end that is fastened to the component that can be moved together with the to-be-moved apparatus, such as the slider or the clamp, is protected by the dragging chain, so that the harness is not directly dragged or pulled in the moving process, thereby ensuring durability of the harness.

In another implementation, the movable end may be electrically connected to the to-be-moved apparatus directly, that is, the movable end is directly fastened on the to-be-moved apparatus. In this implementation, because the harness in the movable end is protected by the drag chain, the harness is not directly dragged or pulled in the moving process, thereby ensuring durability of the harness.

Optionally, the movable end may be fastened to the slider, the clamp, the to-be-moved apparatus, or the like by using a conductive structure. The conductive structure may be a connector or another conductive connection structure. This is not limited.

According to a second aspect, a vehicle door assembly is provided, including: vehicle door glass and a power supply apparatus. The power supply apparatus includes: a slide rail; a slider, where the slider is disposed on the slide rail, and the slider is configured to fasten the vehicle door glass; a drag chain harness groove, where the drag chain harness groove is disposed parallel to the slide rail; and a drag chain harness, where the drag chain harness is disposed in the drag chain harness groove, the drag chain harness includes a fastened end and a movable end, the fastened end is configured to electrically connect to a power supply, the fastened end is fastened relative to the drag chain harness groove, and the movable end is configured to electrically connect to the vehicle door glass.

The vehicle door assembly provided in this embodiment of this application mainly includes the vehicle door glass and the power supply apparatus. The power supply apparatus includes the slide rail, the slider, the drag chain harness groove, and the drag chain harness. The drag chain harness includes the fastened end configured to electrically connect to the power supply and the movable end configured to electrically connect to the vehicle door glass, so that the vehicle door glass can be powered while a moving function is provided for the vehicle door glass.

In addition, in this embodiment of this application, the drag chain harness is used, to protect and restrict an internal harness by using the drag chain, so as to avoid a problem of poor durability of the harness caused by direct use of the harness. In addition, the drag chain harness is disposed in the drag chain harness groove, so that a problem that the harness is wound and knotted can be avoided; and the drag chain harness groove may provide guidance and limiting for the drag chain harness, so as to prevent problems such as shaking and abnormal noise generated in a movement process of the drag chain harness.

With reference to the second aspect, in some implementations of the second aspect, the drag chain harness groove is fastened to a vehicle door.

Optionally, the drag chain harness groove may be integrated with the vehicle door, or may be fastened to the vehicle door by using a support or another connecting piece, or may be fastened to the vehicle door through bonding, welding, or the like. This is not limited in this application.

With reference to the second aspect, in some implementations of the second aspect, the drag chain harness groove is fastened to the slide rail.

Optionally, the drag chain harness groove may be integrated with the slide rail, or may be fastened to the slide rail by using a support or another connecting piece, or may be fastened to the slide rail through bonding, welding, or the like. This is not limited in this application.

According to a third aspect, a vehicle is provided, including the power supply apparatus according to any one of the first aspect or the possible implementations of the first aspect.

According to a fourth aspect, an electronic device is provided, including the power supply apparatus according to any one of the first aspect or the possible implementations of the first aspect.

Optionally, the electronic device includes a smart home device, a construction device, a vehicle, a smartphone, and the like. This is not limited in this application.

### BRIEF DESCRIPTION OF DRAWINGS

FIG. 1 is an example diagram of a conventional vehicle;
FIG. 2 is an example diagram of a power supply apparatus according to an embodiment of this application;
FIG. 3(a) is an example diagram of a partial structure of the power supply apparatus shown in FIG. 2 according to an embodiment of this application;
FIG. 3(b) is an example diagram of a cross-section structure of a drag chain harness of the power supply apparatus shown in FIG. 2 according to an embodiment of this application;
FIG. 4 is an example diagram of another power supply apparatus according to an embodiment of this application;
FIG. 5 is an example diagram of still another power supply apparatus according to an embodiment of this application;
FIG. 6 is an example diagram of yet another power supply apparatus according to an embodiment of this application;
FIG. 7 is an example diagram of a position of a fastened end according to an embodiment of this application; and
FIG. 8 is an example diagram of a vehicle door assembly according to an embodiment of this application.

### DESCRIPTION OF EMBODIMENTS

The following describes technical solutions in embodiments in this application with reference to accompanying drawings.

A power supply apparatus provided in the solutions of this application may be used in the fields such as transportation means, smart home, and construction. The transportation means may include one or more different types of transportation tools or movable objects that operate or move on land (for example, a highway, a road, or a railway), on water (for example, a waterway, a river, or an ocean), or in space. For example, the transportation means may include a vehicle (for example, a smart vehicle), a bicycle, a motorcycle, a train, a subway, an airplane, a ship, an aircraft, a robot, or another type of transportation tool or a movable object.

A vehicle in the transportation means field is used as an example. The power supply apparatus provided in the solutions of this application may supply power to the vehicle door glass while providing a lifting function, so that the vehicle door glass can implement different functions such as light adjustment, color adjustment, display, and touch. The power supply apparatus provided in the solutions of this application may further supply power to a device such as a lidar and a sound system on the vehicle while providing a moving or lifting function, so that the lidar, the sound system, or the like can change a position according to a user requirement while working properly. The field of smart home is used as an example. The power supply apparatus provided in the solutions of this application may supply power to a display, a television, a curtain, or the like while providing a lifting or moving function, to implement different functions such as light adjustment, color adjustment, display, and touch for the display, the television, the curtain, or the like. The construction field is used as an example. The power supply apparatus provided in the solutions of this application may supply power to construction glass, a roof skylight, or the like while providing a lifting or moving function, to implement different functions such as light adjustment, color adjustment, display, and touch for the construction glass, the roof skylight, or the like.

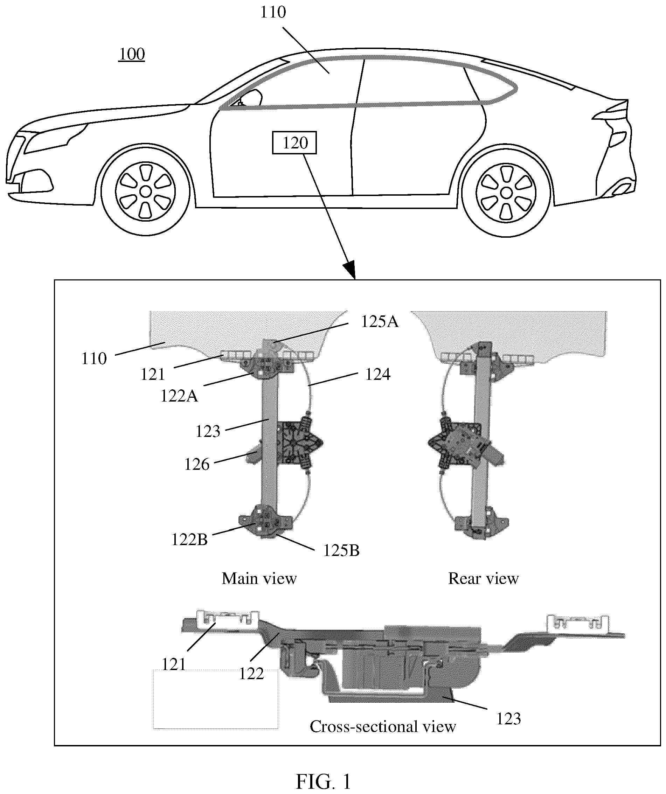

With reference to FIG. 1, the following briefly describes background technologies in embodiments of this application by using a vehicle 100 as an example.

FIG. 1 is an example diagram of a conventional vehicle. As shown in FIG. 1, the vehicle 100 includes a vehicle door, and the vehicle door includes vehicle door glass 110 and a vehicle door glass lifting apparatus 120. The lifting apparatus 120 is usually disposed inside door sheet metal of the vehicle door. Optionally, in the vehicle field, the lifting apparatus 120 may also be referred to as a window lifter. This is not limited in this application.

As shown in FIG. 1, the lifting apparatus 120 may include: a clamp 121, a slider 122, a slide rail 123, a pull cable 124, pulleys 125, and a motor and winch 126.

The clamp 121 may also be referred to as a fastening clip, and is configured to clamp and fasten the vehicle door glass 110. Optionally, in an actual structure, one clamp 121 may be used, or two or more clamps 121 may be used. This is not limited.

The slider 122 is configured to connect to the clamp 121 and slide up and down inside the slide rail 123. As shown in FIG. 1, a position of the slider 122A is a highest position to which the slider can slide, and a position of the slider 122B is a lowest position to which the slider can slide.

The slide rail 123 may also be referred to as a track, and includes a slider groove. The slider groove is configured to restrict a sliding trajectory of the slider 122. The slide rail 123 usually has a flange, and the flange may be coupled to the slider 122 to form a slidable system. Optionally, the slider groove may be formed through stamping or extrusion, and a cross section of the slider groove may be in a "U" shape, a "V" shape, a "C" shape, or the like, which is not limited.

The pull cable 124 is connected to the slider 122, and the slider 122 is pulled to slide up and down inside the slide rail 123 through movement of the pull cable 124.

The pulleys 125 are configured to provide movement guidance and a proper turning radius for the pull cable 124. Optionally, the pulleys 125 may include pulleys 125A and 125B, which are respectively disposed at an upper end and a lower end of the slide rail 123.

The motor and winch 126 is configured to provide power for a lifting system and pull, through rotation of the winch, the pull cable 124 to move.

An overall working principle of the lifting apparatus 120 is as follows: The motor drives the winch to rotate, the winch pulls the pull cable 124 to move, and the pull cable 124 forms a linear displacement inside the slide rail 123 by using the pulleys 125A and 125B, to drive the slider 122 to move up and down along the slide rail 123. Because the slider 122 is connected to the vehicle door glass 110 by using the clamp 121, the slider 122 may drive the vehicle door glass 110 to move up and down in a process in which the slider 122 moves up and down.

It can be learned that in a conventional vehicle, vehicle door glass is not powered. However, with the development of science and technology, a user has a higher requirement for vehicle door glass, and expects that the vehicle door glass can implement different functions such as privacy, sunshade, light adjustment, color adjustment, display, and touch. Power needs to be supplied to the vehicle door glass to implement the foregoing functions of the vehicle door glass. Therefore, how to supply power to the vehicle door glass is a technical problem that needs to be urgently resolved.

Based on this, in embodiments of this application, on the basis of a conventional slide rail and a conventional slider, a drag chain harness and a drag chain harness groove used to accommodate the drag chain harness are added, a fastened end of the drag chain harness is electrically connected to a power supply, and a movable end is electrically connected to to-be-moved apparatuses such as vehicle door glass, so as to supply power to the to-be-moved apparatuses such as the vehicle door glass.

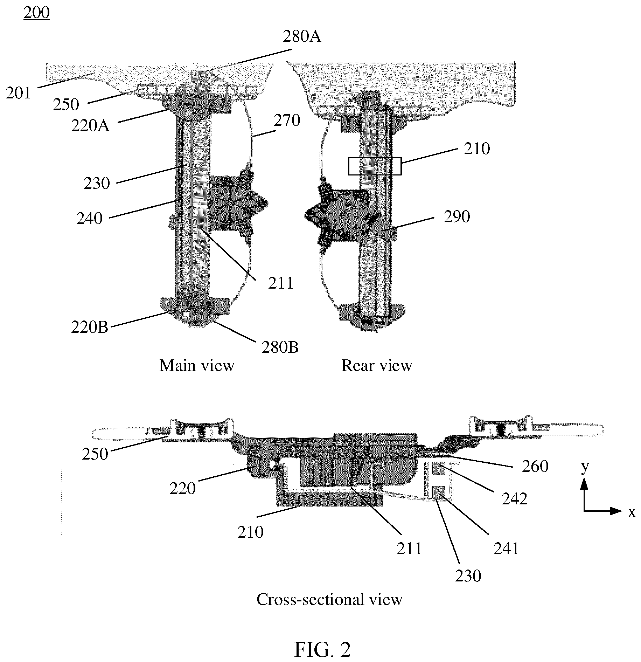

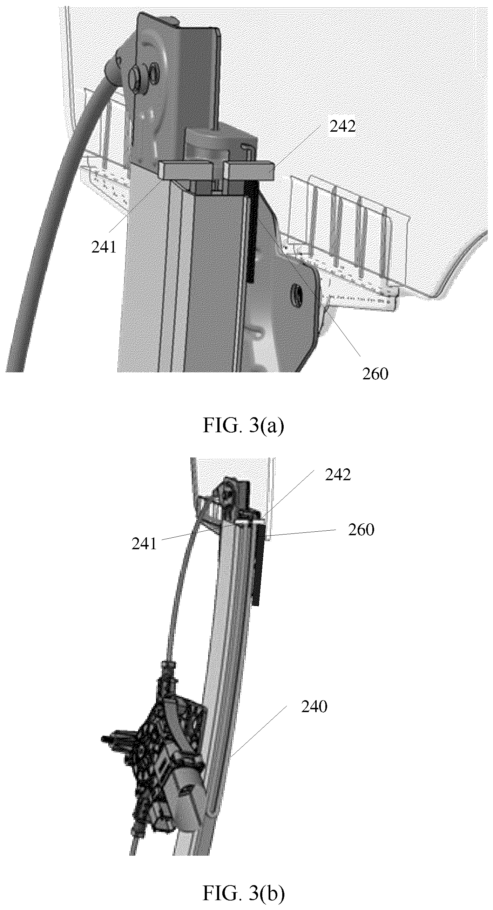

The following describes the solutions of this application in detail with reference to FIG. 2 to FIG. 7. Structures shown in FIG. 2 to FIG. 7 are merely examples. Actually, more or fewer components may be included, and a shape and a structure of each component may be determined based on an actual situation. This is not limited in this application.

FIG. 2 is an example diagram of a power supply apparatus according to an embodiment of this application. As shown in FIG. 2, the power supply apparatus 200 includes: a slide rail 210, a slider 220, a drag chain harness groove 230, and a drag chain harness 240. The slider 220 is disposed on the slide rail 210, and the slider 220 may be configured to fasten a to-be-moved apparatus 201; the drag chain harness groove 230 is fastened to the slide rail 210; and the drag chain harness 240 is disposed in the drag chain harness groove 230. The drag chain harness 240 includes a fastened end 241 and a movable end 242. The fastened end 241 is configured to electrically connect to a power supply, the fastened end 241 is fastened relative to the drag chain harness groove 230, and the movable end 242 is configured to electrically connect to the to-be-moved apparatus 201.

The slider 220 may move along a track direction of the slide rail 210. As shown in FIG. 2, a slider 220A is a highest position to which the slider 220 can slide, and a slider 220B is a lowest position to which the slider 220 can slide.

Optionally, the slider 220 may be used to fasten the to-be-moved apparatus 201 by using a fastening apparatus. For example, the fastening apparatus may be a clamp 250 shown in FIG. 2. Specifically, the clamp 250 may be disposed on the slider 220, and then the to-be-moved apparatus 201 is clamped and fastened by using the clamp 250. Optionally, in an actual structure, one clamp 121 may be used, or two or more clamps 121 may be used. This is not limited in this application.

The drag chain harness 240 includes a drag chain and a harness wrapped by the drag chain. The drag chain includes a plurality of chain sections, and the plurality of chain sections may be connected by using connecting pins.

Optionally, the to-be-moved apparatus 201 may include to-be-moved glass, a display, a curtain, a television, a skylight, a lidar, a sound system, a camera, and the like that are used in the fields such as transportation means, smart home, construction, and smartphone. This is not limited in this application. The movement includes up-down movement, left-right movement, forward-backward movement, and the like. A movement direction of the to-be-moved apparatus 201 is not limited in this application.

According to the power supply apparatus 200 provided in this embodiment of this application, the drag chain harness groove 230 and the drag chain harness 240 are mainly added on the basis of the slide rail 210 and the slider 220. The drag chain harness groove 230 is fastened to the slide rail 210, the drag chain harness 240 is disposed in the drag chain harness groove 230, and the drag chain harness 240 includes the fastened end 241 electrically connected to the power supply and the movable end 242 electrically connected to the to-be-moved apparatus 201, so that power can be supplied to the to-be-moved apparatus 201.

In addition, in this embodiment of this application, the drag chain harness 240 is used, to protect and restrict an internal harness by using the drag chain, so as to avoid a problem of poor durability of the harness caused by direct use of the harness. In addition, the drag chain harness 240 is disposed in the drag chain harness groove 230, so that a problem that the harness is wound and knotted can be avoided; and the drag chain harness groove 230 may provide guidance and limiting for the drag chain harness 240, so as to prevent problems such as shaking and abnormal noise generated in a movement process of the drag chain harness 240.

Optionally, the drag chain harness groove 230 may be fastened on the slide rail 210 in a plurality of manners.

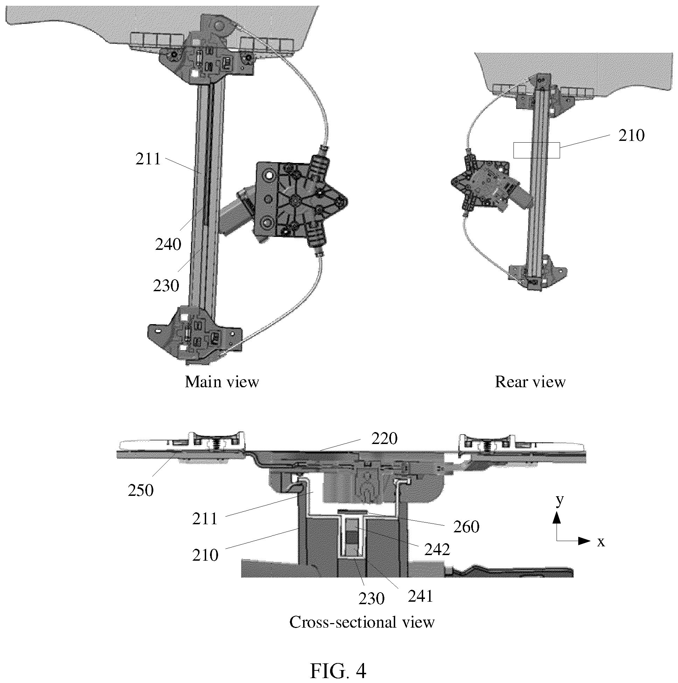

In an implementation, the drag chain harness groove 230 may be directly disposed on the slide rail 210. Specifically, the drag chain harness groove 230 may be disposed on the slide rail 210 along the track direction of the slide rail 210, as shown in FIG. 2 and FIG. 4. That the drag chain harness groove 230 is disposed on the slide rail 210 may be understood that the drag chain harness groove 230 and the slide rail 210 are integrally formed.

The drag chain harness groove 230 in the power supply apparatus 200 provided in this embodiment of this application may be disposed on the slide rail 210. In this way, integration of the power supply apparatus 200 is higher, so that space is saved. In addition, it can be ensured that a track direction of the drag chain harness groove 230 is consistent with the track direction of the slide rail 210, so that consistency of movement trajectories of the drag chain harness 240 and the slider 220 can be ensured.

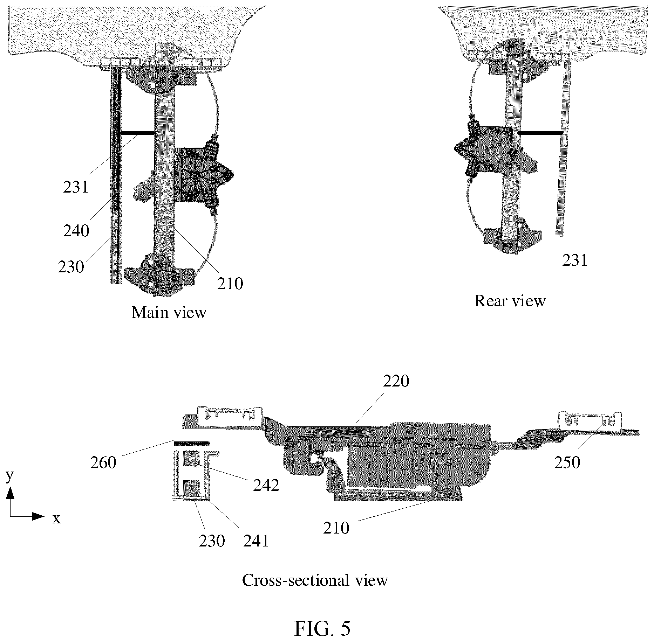

In another implementation, the drag chain harness groove 230 may be fastened to the slide rail 210 by using a support 231, as shown in FIG. 5. In this embodiment of this application, one support 231 may be used to fasten the drag chain harness groove 230 to the slide rail 210, or a plurality of supports 231 may be used to fasten the drag chain harness groove 230 to the slide rail 210. This is not limited.

In this embodiment of this application, the drag chain harness groove 230 may be fastened on the slide rail 210 by using the support 231, which means that the drag chain harness groove 230 may be directly fastened on the basis of the conventional slide rail 210 by using the support 231, and the conventional slide rail 210 does not need to be improved, thereby reducing complexity of a manufacturing process.

In still another implementation, the drag chain harness groove 230 may alternatively be fastened together with the slide rail 210 through bonding or welding.

Optionally, the slide rail 210 may include a slider groove 211, the slider 220 is disposed in the slider groove 211 of the slide rail 210, and the slider groove 211 is configured to restrict a sliding trajectory of the slider 220. The slide rail 210 usually has a flange, and the flange may be coupled to the slider 220 to form a slidable system.

Optionally, the slider groove 211 may be formed through stamping, extrusion, or the like, and a cross section of the slider groove 211 may be in a "U" shape, a "V" shape, a "C" shape, or the like, which is not limited. Similarly, the drag chain harness groove 230 may also be formed through stamping, extrusion, or the like, and a cross section of the drag chain harness groove 230 may also be in a "U" shape, a "V" shape, a "C" shape, or the like, which is not limited. Cross sections of the slider groove 211 and the drag chain harness groove 230 may be the same, for example, both are in a "U" shape; or may be different, for example, one is in a "U" shape, and the other is in a "V" shape. This is not limited in this application.

In this embodiment of this application, position distributions of the drag chain harness groove 230 and the slider groove 211 on a cross section are not limited, and may be flexibly set. Optionally, the drag chain harness groove 230 and the slider groove 211 may be distributed along a first direction; or the drag chain harness groove 230 and the slider groove 211 may be distributed along a second direction, where the first direction and the second direction may form a first included angle.

For example, the first direction may be perpendicular to the track direction of the slide rail 210 and parallel to the plane on which the to-be-moved apparatus 201 is located, that is, an x direction shown in FIG. 2; the second direction may be perpendicular to the track direction of the slide rail 210 and perpendicular to the plane on which the to-be-moved apparatus 201 is located, that is, a y direction shown in FIG. 2; and the first included angle is 90°.

In this case, if the drag chain harness groove 230 and the slider groove 211 are distributed along the first direction, openings of the drag chain harness groove 230 and the slider groove 211 may face the plane (as shown in FIG. 2, FIG. 5, and FIG. 6) on which the to-be-moved apparatus 201 is located, so that consistency of movement trajectories of the drag chain harness 240 and the slider 220 can be ensured.

If the drag chain harness groove 230 and the slider groove 211 are distributed along the second direction, the opening of the drag chain harness groove 230 may face the plane on which the to-be-moved apparatus 201 is located, the drag chain harness groove 230 may be disposed on a side that is of the slider groove 211 and that is away from the slider groove 211, and the opening of the drag chain harness groove 230 faces the slider groove 211 (as shown in FIG. 4). In this way, integration of the power supply apparatus is higher, so that space is saved. In addition, it can be ensured that the track direction of the drag chain harness groove is consistent with the track direction of the slider groove, so that consistency of movement trajectories of the drag chain harness and the slider can be ensured. Optionally, in this case, the cross sections of the drag chain harness groove 230 and the slider groove 211 may be in a shape of an inverted "T" or in a variant form of the shape of the inverted "T". This is not limited.

Optionally, the power supply apparatus 200 may further include a limiter 260. For the limiter 260, refer to FIG. 2 to FIG. 6.

Optionally, the limiter 260 may be disposed on the slider 220, the clamp 250, the to-be-moved apparatus 201, or the like; and the limiter 260 can move along with the movable end 242, and is configured to limit a projection of the movable end 242 on a cross section of the power supply apparatus 200 to moving away from a projection of the fastened end 241, so as to prevent a case such as shaking or abnormal noise generated by the movable end 242 of the drag chain harness 240 in a moving process.

Optionally, a length of the limiter 260 is not limited in this embodiment of this application. For example, the length of the limiter 260 may be determined based on lengths of three to five sections of the drag chain.

Optionally, the limiter 260 may include any one of a baffle plate, a stopper, a top reinforcement bar, and the like. This is not limited.

Location distributions of the fastened end 241 and the movable end 242 on the cross section are not limited in this embodiment of this application, and may be flexibly set. Optionally, the fastened end 241 and the movable end 242 may be distributed along a third direction; or the fastened end 241 and the movable end 242 may be distributed along a fourth direction, where the third direction and the fourth direction may form a second included angle.

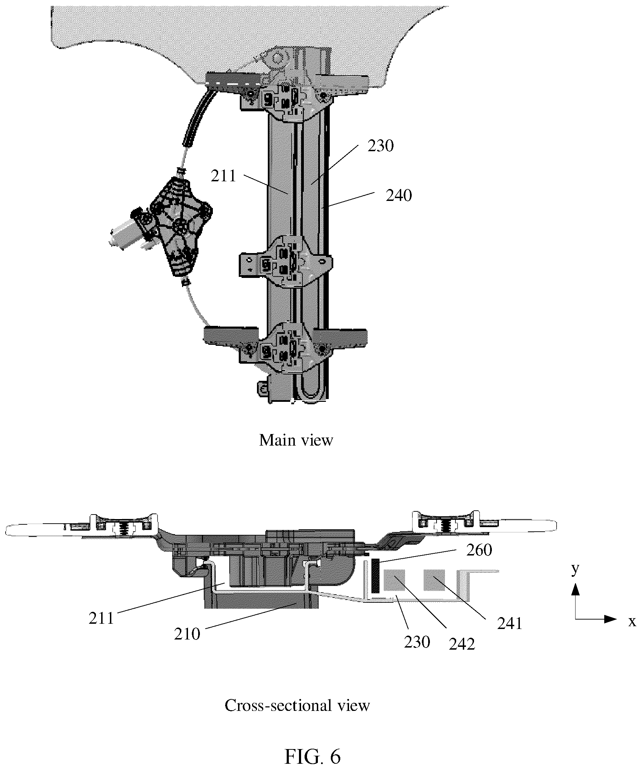

Optionally, the third direction may be perpendicular to the track direction of the slide rail 210 and parallel to the plane on which the to-be-moved apparatus 201 is located (that is, the foregoing x direction). If the fastened end 241 and the movable end 242 are distributed along this direction, a direction of a connecting pin of each section of the drag chain is perpendicular to the plane on which the to-be-moved apparatus 201 is located, which may also be understood as that a plane formed by the movement trajectory of the drag chain is parallel to the plane on which the to-be-moved apparatus 201 is located, as shown in FIG. 6. In this case, the drag chain harness groove 230 occupies relatively small space, so that the integration of the power supply apparatus is higher and space is saved.

Optionally, the fourth direction may be perpendicular to the track direction of the slide rail 210 and perpendicular to the plane on which the to-be-moved apparatus 201 is located (that is, the y direction). If the fastened end 241 and the movable end 242 are distributed along this direction, a direction of a connecting pin of each section of the drag chain is parallel to the plane on which the to-be-moved apparatus 201 is located, which may also be understood as that a plane formed by a movement trajectory of the drag chain is perpendicular to the plane on which the to-be-moved apparatus 201 is located, as shown in FIG. 2 to FIG. 5. In this case, the drag chain harness groove 230 occupies relatively small space, so that integration of the power supply apparatus is higher and space is saved.

Based on this, the second included angle may be 90°.

In an actual operation, the third direction and the fourth direction may be respectively the x direction and the y direction, or may slightly deviate from the x direction and the y direction; and the second included angle may be 90°, or may be close to 90°. This is not limited in this application.

In this embodiment of this application, the movable end 242 may move together with the to-be-moved apparatus 201.

Optionally, that the movable end 242 is configured to electrically connect to the to-be-moved apparatus 201 may be implemented in the following two implementations:

In an implementation, the movable end 242 is electrically connected to the to-be-moved apparatus 201 indirectly by using an extended harness. For example, the movable end 242 may be fastened on a component that can be moved together with the to-be-moved apparatus 201, such as the slider 220 and the clamp 250, and then is electrically connected to the to-be-moved apparatus 201 by using the extended harness. In this implementation, because the component such as the slider 220 or the clamp 250 that can be moved together with the to-be-moved apparatus 201 is stationary relative to the to-be-moved apparatus 201, the extended harness is not dragged or pulled in a moving process, so that durability of the extended harness can be ensured. In addition, the harness in the movable end fastened to the component that can be moved together with the to-be-moved apparatus 201, such as the slider 220 or the clamp 250, is protected by the drag chain, so that the harness is not directly dragged or pulled in the moving process, thereby ensuring durability of the harness.

In another implementation, the movable end 242 may be electrically connected to the to-be-moved apparatus 201 directly, that is, the movable end 242 is directly fastened on the to-be-moved apparatus 201. In this implementation, because the harness in the movable end 242 is protected by the drag chain, the harness is not directly dragged or pulled in the moving process, thereby ensuring durability of the harness.

Optionally, the movable end 242 may be fastened to the slider 220, the clamp 250, the to-be-moved apparatus 201, or the like by using a conductive structure. The conductive structure may be a connector or another conductive connection structure. This is not limited.

Optionally, the fastened end 241 may be electrically connected to the power supply directly, or may be electrically connected to the power supply by using a harness. This is not limited.

Optionally, the power supply apparatus 200 may further include: a pull cable 270, where the pull cable 270 is connected to the slider 220, and is configured to pull the slider 220 to move on the slide rail 210; pulleys 280, where the pulleys 280 include pulleys 280A and 280B, and are disposed at two ends of the slide rail 210 and are configured to provide movement guidance and a turning radius for the pull cable 270; and a motor and winch 290, where the motor and winch 290 is configured to provide power to pull, through rotation of the winch, the pull cable 270 to move.

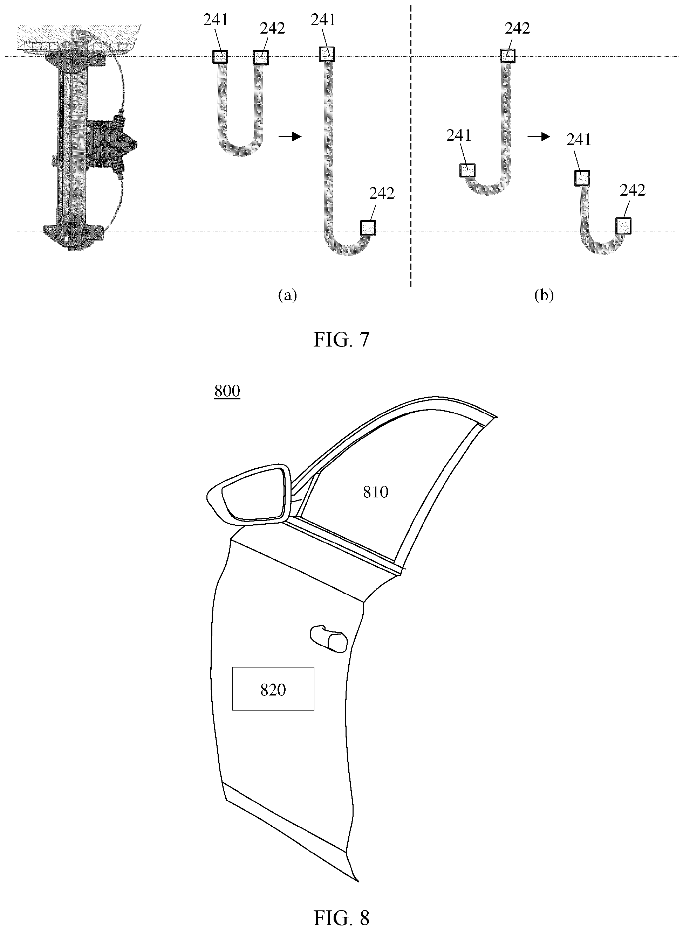

Optionally, the fastened end 241 may be fastened at two ends of a movement stroke, or may be fastened between two ends of a movement stroke, for example, a midpoint or another position of the movement stroke. FIG. 7 is an example diagram of a position of a fastened end 241 according to an embodiment of this application. (a) in FIG. 7 shows that the fastened end 241 is fastened at a top of a movement stroke, and (b) in FIG. 7 shows that the fastened end 241 is fastened between two ends of the movement stroke. As shown in FIG. 7, when the fastened end 241 is fastened between the two ends of the movement stroke, a length of the drag chain harness 240 is significantly reduced, thereby reducing a weight and costs of the drag chain harness 240.

For example, the fastened end 241 may be fastened at two ends of the drag chain harness groove 230, or may be fastened at a first position between the two ends of the drag chain harness groove 230. When the fastened end 241 is fastened between two ends of the drag chain harness groove 230, compared with a case in which the fastened end 241 is fastened to the two ends of the drag chain harness groove 230, a length of the drag chain harness 240 can be reduced, and a weight and costs of the drag chain harness 240 can be reduced.

For example, if the foregoing motor is disposed between the two ends of the slide rail 210, the fastened end 241 may be further fastened to the motor. In this case, the fastened end 241 may be fastened on the motor. Compared with the case in which the fastened end 241 is fastened to the two ends of the drag chain harness groove 230, a length of the drag chain harness 240 can be reduced, and a weight and costs of the drag chain harness 240 can be reduced.

The foregoing position of the fastened end 242 is merely an example. In an actual operation, a specific position at which the fastened end 242 is fastened is determined based on an actual situation. This is not limited in this application, provided that the fastened end 242 is stationary relative to the drag chain harness groove 230.

An overall working principle of the power supply apparatus 200 is as follows: The motor drives the winch to rotate, the winch pulls the pull cable 270 to move, and the pull cable 270 forms a linear displacement inside the slide rail 210 by using the pulleys 280A and 280B, to drive the slider 220 to move up and down along the slide rail 210. Because the slider 220 is connected to the to-be-moved apparatus 201 by using the clamp 250, the slider 220 can drive the to-be-moved apparatus 201 to move up and down. Similarly, the drag chain harness 240 may transfer power of the power supply to the to-be-moved apparatus 201, so as to supply power to the to-be-moved apparatus 201.

Optionally, in this embodiment of this application, a communication harness may be further introduced into the drag chain harness, to implement communication between the to-be-moved apparatus 201 and another device.

FIG. 8 is an example diagram of a vehicle door assembly according to an embodiment of this application. As shown in FIG. 8, the vehicle door assembly 800 includes vehicle door glass 810 and a power supply apparatus 820. The power supply apparatus 820 is disposed inside the door sheet metal of a vehicle door, and the power supply apparatus 820 is configured to supply power to the vehicle door glass 810 while providing a moving function for the vehicle door glass 810.

The power supply apparatus 820 includes: a slide rail; a slider, where the slider is disposed on the slide rail, and the slider is configured to fasten the vehicle door glass 810; a drag chain harness groove, where the drag chain harness groove is disposed parallel to the slide rail; and a drag chain harness, where the drag chain harness is disposed in the drag chain harness groove, the drag chain harness includes a fastened end and a movable end, the fastened end is configured to electrically connect to a power supply, the fastened end is fastened relative to the drag chain harness groove, and the movable end is configured to electrically connect to the vehicle door glass 810.

The vehicle door assembly 800 provided in this embodiment of this application mainly includes the vehicle door glass 810 and the power supply apparatus 820. The power supply apparatus 820 includes the slide rail, the slider, the drag chain harness groove, and the drag chain harness. The drag chain harness includes the fastened end configured to electrically connect to the power supply and the movable end configured to electrically connect to the vehicle door glass 810, so that the vehicle door glass 810 can be powered while a moving function is provided for the vehicle door glass 810.

In addition, in this embodiment of this application, the drag chain harness is used, to protect and restrict an internal harness by using the drag chain, so as to avoid a problem of poor durability of the harness caused by direct use of the harness. In addition, the drag chain harness is disposed in the drag chain harness groove, so that a problem that the harness is wound and knotted can be avoided; and the drag chain harness groove may provide guidance and limiting for the drag chain harness, so as to prevent problems such as shaking and abnormal noise generated in a movement process of the drag chain harness.

In an implementation, the drag chain harness groove may be fastened to the vehicle door.

Optionally, the drag chain harness groove may be integrated with the vehicle door, or may be fastened to the vehicle door by using a support or another connecting piece, or may be fastened to the vehicle door through bonding, welding, or the like. This is not limited in this application.

In another implementation, the drag chain harness groove may be fastened to the slide rail.

Optionally, the drag chain harness groove may be integrated with the slide rail, or may be fastened to the slide rail by using a support or another connecting piece, or may be fastened to the slide rail through bonding, welding, or the like. This is not limited in this application.

For other content related to the vehicle door assembly 800, refer to the foregoing descriptions. Details are not described herein again.

An embodiment of this application further provides a vehicle, including the foregoing power supply apparatus 200 or the foregoing vehicle door assembly 800.

An embodiment of this application further provides an electronic device, including the foregoing power supply apparatus 200. Optionally, the electronic device includes a smart home device, a construction device, a vehicle, a smartphone, and the like. This is not limited in this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply apparatus, comprising:
a slide rail;
a slider, wherein the slider is disposed on the slide rail, and the slider is configured to fasten a to-be-moved apparatus;
a drag chain harness groove, wherein the drag chain harness groove is fastened to the slide rail; and
a drag chain harness, wherein the drag chain harness is disposed in the drag chain harness groove, wherein
the drag chain harness comprises a fastened end and a movable end, the fastened end is configured to electrically connect to a power supply, the fastened end is fastened relative to the drag chain harness groove, and the movable end is configured to electrically connect to the to-be-moved apparatus.

2. The power supply apparatus according to claim 1, wherein the slide rail comprises a slider groove, the slider is disposed in the slider groove of the slide rail, and the drag chain harness groove and the slider groove are distributed along a first direction; or the drag chain harness groove and the slider groove are distributed along a second direction, wherein the first direction and the second direction form a first included angle.

3. The power supply apparatus according to claim 2, wherein the first direction is perpendicular to a track direction of the slide rail, and the first direction is parallel to a plane on which the to-be-moved apparatus is located; and if the drag chain harness groove and the slider groove are distributed along the first direction, openings of the drag chain harness groove and the slider groove face the plane on which the to-be-moved apparatus is located.

4. The power supply apparatus according to claim 2, wherein the second direction is perpendicular to a track direction of the slide rail, and the second direction is perpendicular to a plane on which the to-be-moved apparatus is located; and if the drag chain harness groove and the slider groove are distributed along the second direction, an opening of the drag chain harness groove faces the plane on which the to-be-moved apparatus is located, the drag chain harness groove is disposed on a side that is of the slider groove and that is away from the slider groove, and the opening of the drag chain harness groove faces the slider groove.

5. The power supply apparatus according to any one of claims 1 to 4, wherein the drag chain harness groove is disposed on the slide rail.

6. The power supply apparatus according to any one of claims 1 to 3, wherein the drag chain harness groove is fastened to the slide rail by using a support.

7. The power supply apparatus according to any one of claims 1 to 6, wherein the power supply apparatus further comprises:
a limiter, wherein the limiter is disposed on the slider or the to-be-moved apparatus, and is configured to limit a projection of the movable end on a cross section of the power supply apparatus to moving away from a projection of the fastened end.

8. The power supply apparatus according to any one of claims 1 to 7, wherein the fastened end and the movable end are distributed along a third direction; or the fastened end and the movable end are distributed along a fourth direction, wherein the third direction and the fourth direction form a second included angle.

9. The power supply apparatus according to any one of claims 1 to 8, wherein the fastened end is fastened at a first position on the drag chain harness groove, and the first position is located between two ends of the drag chain harness groove.

10. The power supply apparatus according to any one of claims 1 to 9, wherein the power supply apparatus further comprises:
a pull cable, wherein the pull cable is connected to the slider and is configured to pull the slider to move on the slide rail;
pulleys, wherein the pulleys are disposed at two ends of the slide rail and are configured to provide movement guidance and a turning radius for the pull cable; and
a motor and winch, wherein the motor and winch is configured to provide power to pull, through rotation of the winch, the pull cable to move.

11. The power supply apparatus according to claim 10, wherein the motor is disposed between the two ends of the slide rail, and the fastened end is fastened to the motor.

12. The power supply apparatus according to any one of claims 1 to 11, wherein the movable end is fastened to the slider, and the movable end is electrically connected to the to-be-moved apparatus by using an extended harness; or the movable end is fastened to the to-be-moved apparatus.

13. A vehicle door assembly, comprising: vehicle door glass and a power supply apparatus, wherein the power supply apparatus comprises:
a slide rail;
a slider, wherein the slider is disposed on the slide rail, and the slider is configured to fasten the vehicle door glass;
a drag chain harness groove, wherein the drag chain harness groove is disposed parallel to the slide rail; and
a drag chain harness, wherein the drag chain harness is disposed in the drag chain harness groove, wherein
the drag chain harness comprises a fastened end and a movable end, the fastened end is configured to electrically connect to a power supply, the fastened end is fastened relative to the drag chain harness groove, and the movable end is configured to electrically connect to the vehicle door glass.

14. The vehicle door assembly according to claim 13, wherein the drag chain harness groove is fastened to a vehicle door.

15. The vehicle door assembly according to claim 13, wherein the drag chain harness groove is fastened to the slide rail.

16. A vehicle, comprising the power supply apparatus according to any one of claims 1 to 12.

17. An electronic device, comprising the power supply apparatus according to any one of claims 1 to 12.
